# EUROPÄISCHE PATENTSCHRIFT

(11) **EP 2 682 357 B1**
(45) Veröffentlichungstag und Bekanntmachung des Hinweises auf die Patenterteilung: **08.06.2016**
(21) Anmeldenummer: 13001736.1
(22) Anmeldetag: 05.04.2013
(51) Int. Cl.: B65G 65/00, B23Q 7/14, B62D 65/00

(54) **Warenumschlagstation**
Goods transfer station
Poste de transfert de marchandises

(30) Priorität: 06.07.2012 DE 102012106091
(43) Veröffentlichungstag der Anmeldung: 08.01.2014
(73) Patentinhaber: Dr. Ing. h.c. F. Porsche AG, 70435 Stuttgart (DE)
(72) Erfinder: Vandreier, Marc, 04157 Leipzig (DE); Holl, Mirko, 10407 Berlin (DE)

(56) Entgegenhaltungen:
- EP-A1- 2 025 631
- EP-A1- 2 543 615
- DE-A1- 19 652 195
- JP-A- H 043 724
- US-B1- 6 447 236

## Beschreibung

Die vorliegende Erfindung betrifft eine Warenumschlagstation, die von einer Vorder- und einer Rückseite her be- und entladbar ist. Die Erfindung betrifft weiter eine Warenumschlageinrichtung mit zwei solchen, nebeneinander angeordneten Warenumschlagstationen.

Warenumschlagstationen sind aus vielen Fertigungsbereichen bekannt, wobei aus Kostengründen ein möglichst schnelles und einfaches Umschlagen der angelieferten Waren erfolgen soll. Hierbei spielt insbesondere auch die sogenannte "Just-in-time"-Produktion eine große Rolle, bei welcher Wareneingangslager vorzugsweise gänzlich entbehrlich sind und die Anlieferung der für die Produktion erforderlichen Waren kontinuierlich und stets zum richtigen Zeitpunkt erfolgt. Durch den Wegfall großer Wareneingangslager lassen sich erhebliche Kosteneinsparungen erreichen.

Um auch Robotern eine Entnahme von Teilen aus derartigen Warenumschlagstationen zu ermöglichen, ist es unerlässlich, dass diese stets an der gleichen Position bereit gestellt werden, um Beschädigungen durch den Roboter zu vermeiden und ein sicheres Ergreifen zu gewährleisten.

DE 196 52 195 A1 offenbart eine Waren umschlagstation gemäß dem Oberbegriff des Anspruchs 1. Die vorliegende Erfindung beschäftigt sich mit dem Problem, eine Warenumschlagstation, insbesondere an einer Fertigungsstraße derart weiterzubilden, dass aus dieser eine automatisierte Warenentnahme möglich ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine an sich bekannte Warenumschlagstation an einer Fertigungsstraße mit einer neuartigen Ausrichteinrichtung zu versehen, die eine Ausrichtung eines Ladungsträgers in x-, y-, und z-Richtung ermöglicht und dadurch die zu entnehmenden Waren innerhalb der Warenumschlagstation räumlich exakt positioniert. Durch die räumlich exakt definierte Lage des Ladungsträgers sind auch die darin angeordneten Waren räumlich exakt positioniert und können so besser automatisch ergriffen werden. Die erfindungsgemäße Warenumschlagstation ist dabei von einer ersten Seite her be- und entladbar und weist ein Tablar auf, auf dem ein Ladungsträger, insbesondere ein Warenkorb, abstellbar ist. Das Tablar samt dem Ladungsträger ist dabei in die Warenumschlagstation von der ersten Seite aus einschiebbar und durch Herausziehen wieder entnehmbar. Eine Anlieferung des Tablars samt Ladungsträger erfolgt üblicherweise mittels eines sogenannten Routenzugwagens, der zur Übergabe des Tablars und des Ladungsträgers fluchtend vor der Warenumschlagstation geparkt wird, woraufhin dann das Tablar samt dem darauf abgestellten Ladungsträger einfach in die Warenumschlagstation eingeschoben werden kann. Auf ähnliche Weise erfolgt auch ein Entnehmen eines Tablars mit darauf abgestelltem und entleertem Ladungsträger. Die erfindungsgemäße Warenumschlagstation weist nun eine erste Ausrichteinrichtung auf, die zumindest den Ladungsträger in x-Richtung in der Warenumschlagstation ausrichtet. Über eine zweite erfindungsgemäße Ausrichteinrichtung erfolgt ein Ausrichten des Ladungsträgers in y-Richtung innerhalb der Warenumschlagstation, wogegen mit einer dritten Ausrichtung das Ausrichten zumindest des Ladungsträgers in z-Richtung, das heißt in Hochrichtung, in der Warenumschlagstation erfolgt. Unter der x-Richtung wird dabei die Einschieberichtung des Tablars bzw. des Ladungsträgers in die Warenumschlagstation verstanden, wogegen die y-Richtung quer dazu verläuft. Für eine automatisierte Entnahme von Teilen aus dem Ladungsträger, insbesondere durch einen Roboter, ist es erforderlich, dass die zu entnehmenden Teile stets an der gleichen Stelle innerhalb der Warenumschlagstation bereitgestellt werden. Dies kann mittels den insgesamt drei Ausrichteinrichtungen erreicht werden, da diese den Ladungsträger exakt in x-, y- und z-Richtung ausrichten. Zumindest die dritte Ausrichteinrichtung wird dabei zunächst mit den entsprechenden Ausrichtpositionen programmiert, so dass nach einem Einschieben eines entsprechenden Ladungsträgers üblicherweise ein vollautomatisiertes Ausrichten des Ladungsträgers und damit auch der darin enthaltenen Waren erfolgt. Eine derartige erfindungsgemäße Warenumschlagstation ermöglicht somit den Einsatz von Robotern insbesondere im Bereich von Fertigungsstraßen zum Einbau von Teilen, wobei diese Teile in den zuvor beschriebenen Ladungsträgern angeliefert werden.

Bei einer vorteilhaften Weiterbildung der erfindungsgemäßen Lösung weist die erste Ausrichteinrichtung zumindest einen Anschlag am Ende zumindest einer Horizontalen oder zumindest einer seitlichen Rollenbahn oder benachbart dazu auf. Ein derartiger Anschlag begrenzt somit die Einschiebebewegung des Ladungsträgers in x-Richtung in die Warenumschlagstation und stellt eine äußerst einfache und kostengünstige Ausführungsform der ersten Ausrichteinrichtung dar. Die zweite Ausrichteinrichtung kann beispielsweise zwei seitliche Rollenbahnen aufweisen, zwischen denen der Ladungsträger geführt ist. Die seitlichen Rollenbahnen wirken dabei wie Führungsschienen, die eine exakte Ausrichtung des eingeschobenen Ladungsträgers in y-Richtung erzwingen. Mittels der ersten und zweiten Ausrichteinrichtung kann somit der Ladungsträger beim einfachen Einschieben in die Warenumschlagstation bereits exakt in x- und y-Richtung innerhalb der Warenumschlagstation ausgerichtet werden.

Erfindungsgemäß weist die dritte Ausrichteinrichtung eine Hubeinrichtung mit zumindest einem Hubbolzen auf. Der zumindest eine Hubbolzen ist dabei in der Lage, den Ladungsträger vom Tablar abzuheben und in eine exakt vordefinierte Höhe zu befördern, wodurch der Ladungsträger und damit auch die darin angeordneten Waren exakt in z-Richtung in der Warenumschlagstation ausgerichtet sind. Das Tablar weist hierzu zumindest eine Durchgangsöffnung auf, durch welche der zumindest einen Hubbolzen zum Anheben des Ladungsträgers hindurchgreift, ohne dabei das Tablar selbst anzuheben. Ein Durchmesser der Durchgangsöffnungen ist dabei größer als der Durchmesser des zumindest einen Hubbolzens, so dass die dritte Ausrichteinrichtung mit ihrem Hubbolzen zum Ausrichten des Ladungsträgers in Hochrichtung, das heißt in z-Richtung, einfach den zumindest einen Hubbolzen hochfährt und bei Kontakt mit dem Ladungsträger diesen anhebt. Durch die erste und zweite Ausrichteinrichtung sind der Ladungsträger und damit indirekt auch das diesen tragende Tablar bereits in x- und y-Richtung innerhalb der Warenumschlagstation ausgerichtet, so dass die zumindest eine Durchgangsöffnung des Tablars üblicherweise exakt fluchtend zum Hubbolzen der dritten Ausrichteinrichtung angeordnet ist.

Bei einer weiteren vorteilhaften Ausführungsform der erfindungsgemäßen Lösung weist die Warenumschlagstation eine Schutzumhausung mit einem ersten Schiebetor an der ersten Seite auf, wobei die dritte Ausrichteinrichtung ausschließlich bei geschlossenem Schiebetor betriebsbereit ist. Ein Anheben des Ladungsträgers, das heißt ein Ausrichten desselben in z-Richtung, kann somit ausschließlich bei geschlossenem erstem Schiebetor erfolgen, wobei zur Erfassung der Schließstellung des ersten Schiebetores beispielsweise ein Sensor am ersten Schiebetor vorgesehen sein kann. Ein derartiger Sensor kann beispielsweise in der Art eines einfachen Druckschalters ausgebildet sein. Die Schutzumhausung kann an einer zweiten und/oder an einer dritten Seite ein weiteres Schiebetor aufweisen, das zur Entnahme von Waren aus dem Ladungsträger geöffnet sein muss. Das weitere Schiebetor kann dabei beispielsweise auf der dem ersten Schiebetor gegenüberliegenden Seite bzw. an einer Oberseite der Schutzumhausung angeordnet sein. Denkbar ist dabei insbesondere, dass zwei weitere Schiebetore vorgesehen sind, wovon eines die zweite Seite öffnet bzw. schließt, wogegen das zweite weitere Schiebetor die dritte Seite der Schutzumhausung, das heißt beispielsweise deren Oberseite, öffnet bzw. verschließt. Selbstverständlich ist auch ein Zusammenhängen der beiden weiteren Schiebetore denkbar, so dass ausschließlich ein simultanes Öffnen bzw. Schließen der zweiten bzw. dritten Seite der Schutzumhausung erfolgen kann. Die Schiebetore sind üblicherweise mit einer Wellgitterfüllung versehen, die zwar eine Sicht auf den in der Warenumschlagstation abgestellten Ladungsträger erlaubt, einen direkten Zugriff darauf aber verhindert und dadurch ein Verletzungsrisiko reduziert. Selbstverständlich ist die Warenumschlagstation auch ohne eine derartige Schutzumhausung denkbar.

Die Erfindung betrifft außerdem eine Warenumschlageinrichtung mit zwei nebeneinander angeordneten Warenumschlagstationen wie in den vorherigen Absätzen beschrieben, wobei eine beide Warenumschlagstationen einhausende Schutzumhausung mit zumindest einem ersten Schiebetor an der ersten Seite vorgesehen ist. Die beide Warenumschlagstationen einhausende Schutzumhausung weist darüber hinaus an einer zweiten und/oder an einer dritten Seite ein weiteres Schiebetor auf, das zur Entnahme von Waren aus dem Ladungsträger geöffnet sein muss. Bei einer Ausführungsform verschließt das erste Schiebetor dabei die erste Seite der ersten Warenumschlagstation, während es zur gleichen Zeit die erste Seite der zweiten Warenumschlagstation öffnet. Selbstverständlich ist dies auch umgekehrt der Fall. Das weitere Schiebetor hingegen verschließt die zweite bzw. dritte Seite der ersten Warenumschlagstation, während es zeitgleich die zweite oder dritte Seite der zweiten Warenumschlagstation öffnet, oder umgekehrt. Sowohl das erste Schiebetor als auch das weitere Schiebetor sind dabei jeweils zwischen zwei Stellungen verschiebbar, in welchen es die jeweils zugehörige Seite der betreffenden Warenumschlagstation entweder verschließt oder öffnet und gleichzeitig die jeweils zugehörige Seite der benachbarten Warenumschlagstation verschließt oder öffnet. Mit der erfindungsgemäßen Warenumschlageinrichtung kann somit ein nahtloses Übergehen von einem Ladungsträger auf den anderen Ladungsträger erfolgen, ohne dass hierbei Unterbrechungen auftreten.

Bei einer weiteren vorteilhaften Ausführungsform der erfindungsgemäßen Lösung weist die Warenumschlageinrichtung eine Entnahmeeinrichtung, insbesondere einen Roboter, zur Entnahme von Waren aus dem Ladungsträger auf. Ein derartiger Roboter ist dabei in der Lage, die im Ladungsträger bereitgestellten Waren aus diesen zu entnehmen und gegebenenfalls sogar weiter zu verwenden, insbesondere einzubauen. Denkbar ist hier insbesondere der Einbau von Windschutzscheiben in Kraftfahrzeugen, wobei derartige Windschutzscheiben beispielsweise in entsprechenden Ladungsträgern bereitgestellt und in diesen an die jeweilige Fertigungsstraße angeliefert werden. Die Entnahmeeinrichtung, das heißt der Roboter, entnimmt dann die jeweilige Windschutzscheibe aus dem ausgerichteten Ladungsträger und baut diese direkt in das entsprechende Kraftfahrzeug ein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine erfindungsgemäße Warenumschlagstation mit einem eingeschobenen Tablar und einem darauf abgestellten Ladungsträger,
- Fig. 2: eine Darstellung wie in Fig. 1, jedoch von einer anderen Seite,
- Fig. 3: eine weitere Darstellung der erfindungsgemäßen Warenumschlagstation,
- Fig. 4: eine Schnittdarstellung durch die erfindungsgemäße Warenumschlagstation im Bereich einer Hubeinrichtung mit einem Hubbolzen,
- Fig. 5a-c: eine erfindungsgemäße Warenumschlageinrichtung mit zwei benachbart zueinander angeordneten Warenumschlagstationen in unterschiedlichen Arbeitsstellungen.

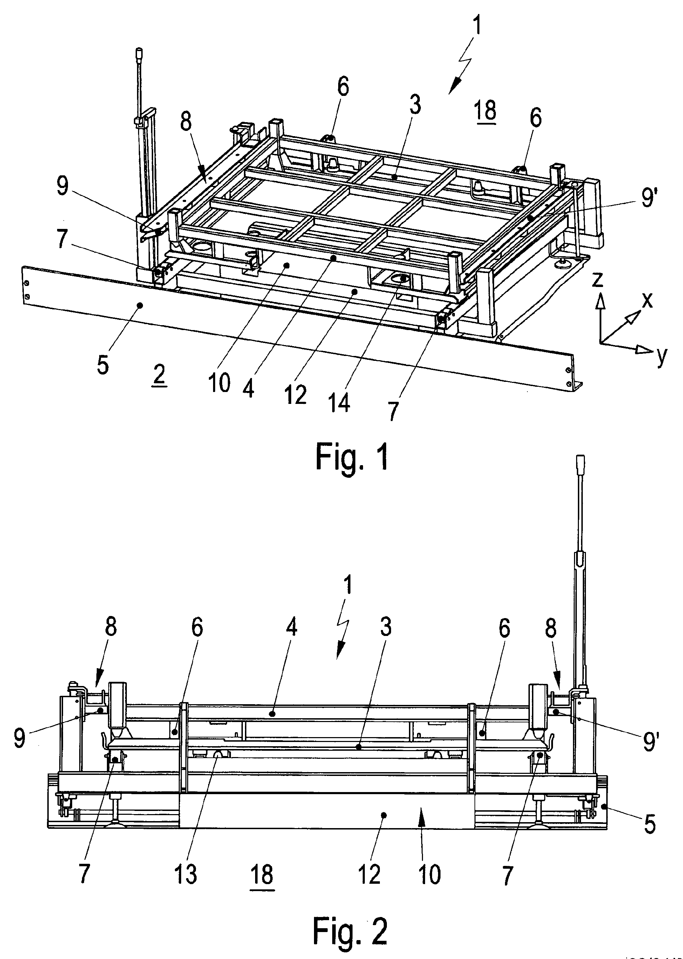

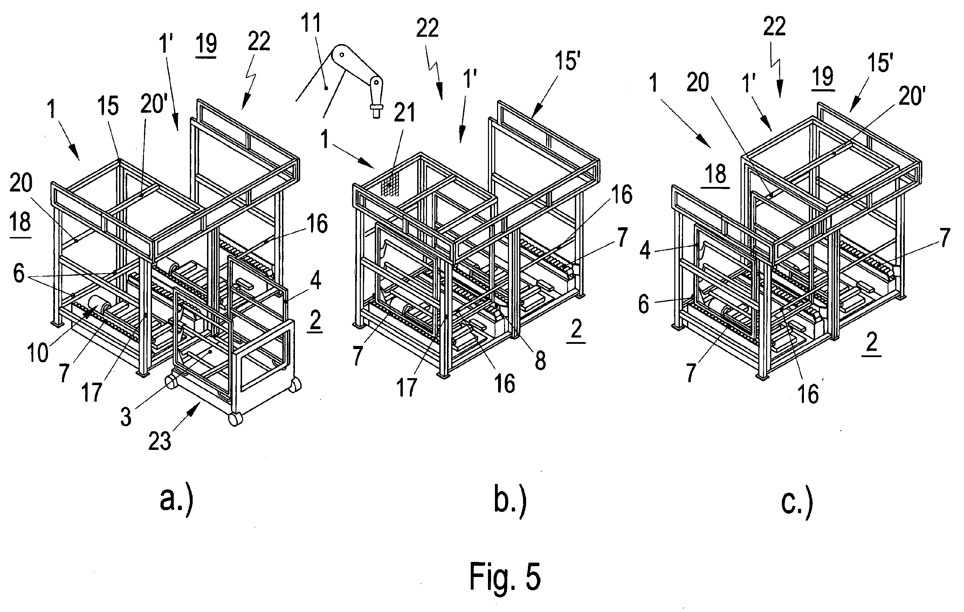

Entsprechend den Figuren 1-5, weist eine erfindungsgemäße Warenumschlagstation 1 eine erste Seite 2 auf, von welcher her die Warenumschlagstation 1 be- und entladbar ist. Besonders deutlich ist dies in den Figuren 5a-c gezeigt. Zudem weist die erfindungsgemäße Warenumschlagstation 1 ein Tablar 3 auf, auf welchem ein Ladungsträger 4, beispielsweise ein Warenkorb, abstellbar ist. Das Tablar 3 stellt dabei lediglich eine Aufnahme für den darauf abgestellten Ladungsträger 4 dar, wobei der Ladungsträger 4 generell auch als Gitterrohrrahmen ausgebildet sein kann. Prinzipiell ist das Tablar 3 samt dem zugehörigen Ladungsträger 4 in die Warenumschlagstation 1 von der ersten Seite 2 aus einschiebbar und auf dieser Seite 2 auch wieder entnehmbar. Auf der ersten Seite 2 ist üblicherweise darüber hinaus ein Anfahrschutz 5 angeordnet, der ein Beschädigen der Warenumschlagstation 1 bei einem Anprallen eines Zugroutenwagens 23 (vgl. Figur 5a) verhindert. Um nun insbesondere ein vollautomatisiertes Entnehmen von in dem Ladungsträger 4 angeordneten Waren zu ermöglichen, ist es erforderlich, dass der Ladungsträger 4 und damit auch die darin angeordneten Waren eine stets gleiche Position innerhalb der erfindungsgemäßen Warenumschlagstation 1 einnehmen. Zu diesem Zweck weist die erfindungsgemäße Warenumschlagstation 1 eine erste Ausrichteinrichtung 6 auf, die zumindest den Ladungsträger 4 in x-Richtung innerhalb der Warenumschlagstation 1 ausrichtet. Die erste Ausrichteinrichtung 6 kann dabei beispielsweise als Anschlag am Ende zumindest einer horizontalen Rollenbahn 7 oder benachbart zu dieser ausgebildet sein. Des Weiteren ist eine zweite Ausrichteinrichtung 8 vorgesehen, die zumindest den Ladungsträger 4 in y-Richtung, also quer zur x-Richtung, in der Warenumschlagstation 1 ausrichtet. Die zweite Ausrichteinrichtung 8 weist dabei zwei seitliche Rollenbahnen 9 und 9' auf, zwischen denen der Ladungsträger 4 geführt ist. Die zweite Ausrichteinrichtung 8 ermöglicht so ein genaues Positionieren des Ladungsträgers 4 in y-Richtung. Schließlich weist die erfindungsgemäße Warenumschlagstation 1 noch eine dritte Ausrichteinrichtung 10 auf, die zumindest den Ladungsträger in z-Richtung, das heißt in Hochrichtung, innerhalb der Warenumschlagstation 1 ausrichtet. Durch die insgesamt drei Ausrichteinrichtungen 6, 8 und 10 ist eine exakte räumliche Ausrichtung des Ladungsträgers 4 und damit auch der darin abgestellten und nicht gezeigten Waren innerhalb der Warenumschlagstation 1 möglich. Durch die exakt vordefinierte räumliche Positionierung der Waren können diese von einer Entnahmeeinrichtung 11, beispielsweise einem Roboter (vgl. Figur 5b) zielsicher gegriffen werden.

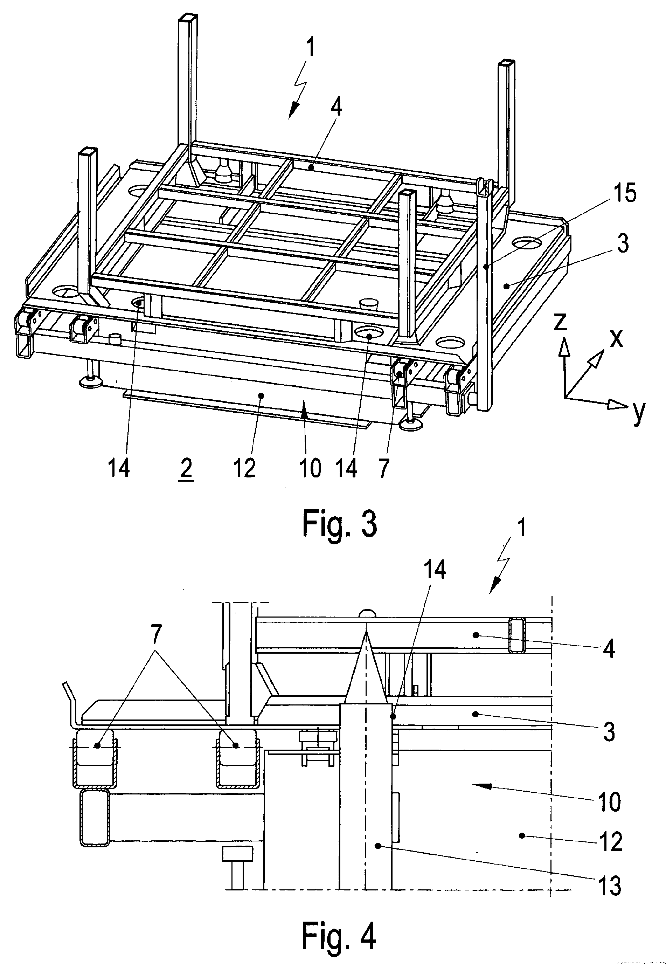

Die erste und die zweite Ausrichteinrichtung 6 und 8 sind dabei einfache mechanische Anschläge bzw. Führungen, wogegen die dritte Ausrichteinrichtung 10 eine Hubeinrichtung 12 mit zumindest einem Hubbolzen 13 aufweist (vgl. Figur 4). Der Hubbolzen 13 der Hubeinrichtung 12 ist dabei vertikal verfahrbar und durchgreift beim Anheben des Ladungsträgers 4 eine zugehörige Durchgangsöffnung 14 in dem Tablar 3. Ein Anheben des Ladungsträgers 4 durch den zumindest einen Hubbolzen 13 erfolgt dabei unabhängig vom Tablar 3, das heißt ohne Anheben des Tablars 3.

Die Höhe, bis zu welcher der Ladungsträger 4 durch den oder die Hubbolzen 13 angehoben werden soll, ist vorab in der Hubeinrichtung 12 hinterlegt und auf die Entnahmeeinrichtung 11 abgestimmt. Üblicherweise beträgt diese Höhe ca. 15 bis 20 mm.

Betrachtet man die Figuren 5a-c, so kann man erkennen, dass die Warenumschlagstation 1 eine Schutzumhausung 15 mit einem ersten Schiebetor 16 an der ersten Seite 2 aufweist, wobei die dritte Ausrichteinrichtung 10 ausschließlich bei geschlossenem Schiebetor 16 betriebsbereit ist und den Ladungsträger 4 anheben kann. Um eine Schließstellung des ersten Schiebetors 16 zu erfassen, kann ein Sensor 17 am ersten Schiebetor 16 angeordnet sein. An einer zweiten Seite 18 und/oder an einer dritten Seite 19 kann die Warenumschlagstation 1 ein weiteres Schiebetor 20 bzw. 20' aufweisen, welches zur Entnahme von Waren aus dem Ladungsträger 4 geöffnet sein muss. Zumindest eines dieser Schiebetore 16, 20, 20' kann dabei eine Wellgitterfüllung 21 aufweisen, welche zwar eine Sicht auf die im Ladungsträger 4 angeordneten Waren erlaubt, einen direkten Zugriff jedoch unterbindet und dadurch auch ein Verletzungsrisiko reduziert. Die Schutzumhausung 15 kann beispielsweise aus Aluminiumprofilen aufgebaut sein.

Betrachtet man die Figuren 5a-c, so kann man dort eine Warenumschlageinrichtung 22 mit zwei nebeneinander angeordneten Warenumschlagstationen 1, 1' erkennen. Die Warenumschlageinrichtung 22 besitzt dabei eine beide Warenumschlagstationen 1, 1' einhausende Schutzumhausung 15' mit einem ersten Schiebetor 16 an der ersten Seite 2. An der zweiten Seite 18 bzw. an der dritten Seite 19 kann ein weiteres Schiebetor 20 bzw. 20' vorgesehen sein, welches bzw. welche zur Entnahme von Waren aus dem Ladungsträger 4 geöffnet sein muss bzw. müssen. Das erste Schiebetor 16 verschließt dabei die erste Seite 2 der ersten Warenumschlagstation 1, während es die erste Seite 2 der zweiten Warenumschlagstation 1' öffnet, oder umgekehrt. Selbstverständlich ist auch denkbar, dass beide Warenumschlagstationen 1, 1' der Warenumschlageinrichtung 22 ein eigenes erstes Schiebetor 16 besitzen. Das weitere Schiebetor 20 bzw. 20' verschließt die zweite Seite 18 und/oder die dritte Seite 19 der ersten Warenumschlagstation 1, wie dies gemäß der Figur 5a dargestellt ist, während es die zweite und die dritte Seite 18, 19 der zweiten Warenumschlagstation 1' öffnet und dadurch dort eine Warenentnahme ermöglicht. Das weitere Schiebetor 20 kann dabei zusammenhängend mit dem Schiebetor 20' oder aber separat von diesem ausgebildet sein.

Betrachtet man die Figur 5a, so kann man erkennen, dass an der Warenumschlagstation 1 das erste Schiebetor 16 geöffnet ist und somit der Ladungsträger 4 zusammen mit dem Tablar 3 vom Routenzugwagen 23 in die erste Warenumschlagstation 1 eingeschoben werden kann. Nach dem Einschieben und nach dem Schließen des ersten Schiebetors 16 erfolgt ein räumliches Ausrichten des Ladungsträgers 4, wie dies zuvor beschrieben wurde, woraufhin die Entnahmeeinrichtung 11, beispielsweise ein Roboter, die im Ladungsträger 4 angeordneten Waren zielsicher entnehmen kann. Das Entnehmen erfolgt dabei selbstverständlich erst bei geöffnetem weiteren Schiebetor 20 bzw. 20', je nachdem von welcher Seite aus die Entnahmeeinrichtung 1 die Entnahme tätigt. Ein derartiger Zustand ist beispielsweise gemäß der Figur 5c dargestellt.

Ist der Ladungsträger 4 entleert, so fährt die Ausrichteinrichtung 10 in ihre Grundstellung zurück, woraufhin das erste Schiebetor 16 wieder geöffnet werden kann und der Ladungsträger 4 zusammen mit dem Tablar 3 auf einen leeren Routenzugwagen 23 zurückgezogen werden kann.

Selbstverständlich ist klar, dass die Umhausung 15 bzw. 15' nicht unbedingt erforderlich ist, so dass die erfindungsgemäße Warenumschlagstation 1, wie sie in den Figuren 1 und 2 dargestellt ist, ohne eine derartige Umhausung 15 auskommen kann. Eine räumliche Ausrichtung des Ladungsträgers 4 ist dabei unabhängig von der Umhausung 15 möglich und lediglich durch die drei Ausrichteinrichtungen 6, 8 und 10 bedingt.

Mit der erfindungsgemäßen Warenumschlagstation 1 und insbesondere auch mit der erfindungsgemäßen Warenumschlageinrichtung 22 können Waren räumlich derart exakt positioniert bereitgestellt werden, dass eine maschinelle Entnahme problemlos möglich ist.

## Patentansprüche

1. Warenumschlagstation (1,1'), die von einer ersten Seite (2) her be- und entladbar ist,
- mit einem Tablar (3), auf dem ein Ladungsträger (4), insbesondere ein Warenkorb, abstellbar ist, wobei das Tablar (3) samt Ladungsträger (4) in die Warenumschlagstation (1,1') von der ersten Seite (2) aus einschiebbar und wieder entnehmbar ist,
- mit einer ersten Ausrichteinrichtung (6), die zumindest den Ladungsträger (4) in x-Richtung in der Warenumschlagstation (1,1') ausrichtet,
- mit einer zweiten Ausrichteinrichtung (8), die zumindest den Ladungsträger (4) in y-Richtung in der Warenumschlagstation (1,1') ausrichtet,
- mit einer dritten Ausrichteinrichtung (10), die zumindest den Ladungsträger (4) in z-Richtung in der Warenumschlagstation (1,1') ausrichtet, so dass der Ladungsträger (4) innerhalb der Warenumschlagstation (1,1') eine räumlich exakt definierte Position einnimmt, **dadurch gekennzeichnet, dass** die dritte Ausrichteinrichtung (10) eine Hubeinrichtung (12) mit zumindest einem Hubbolzen (13) aufweist, wobei das Tablar (3) zumindest eine Durchgangsöffnung (14) aufweist, durch welche der zumindest eine Hubbolzen (13) zum Anheben des Ladungsträgers (4) hindurchgreift, ohne dabei das Tablar (3) selbst anzuheben.

2. Warenumschlagstation nach Anspruch 1, **dadurch gekennzeichnet, dass** die erste Ausrichteinrichtung (6) zumindest einen Anschlag, insbesondere am Ende zumindest einer horizontalen Rollenbahn (7) oder zumindest einer seitlichen Rollenbahn (9,9'), aufweist.

3. Warenumschlagstation nach Anspruch 1 oder 2, **dadurch gekennzeichnet, dass** die zweite Ausrichteinrichtung (8) zwei seitliche Rollenbahnen (9,9') aufweist, zwischen denen der Ladungsträger (4) geführt ist.

4. Warenumschlagstation nach einem der vorhergehenden Ansprüche, **dadurch gekennzeichnet, dass** die Warenumschlagstation (1,1') eine Schutzumhausung (15) mit einem ersten Schiebetor (16) an der ersten Seite (2) aufweist, wobei die dritte Ausrichteinrichtung (10) ausschließlich bei geschlossenem Schiebetor (16) betriebsbereit ist.

5. Warenumschlagstation nach Anspruch 4, **dadurch gekennzeichnet, dass** ein Sensor (17) am ersten Schiebetor (16) vorgesehen ist, der eine Schließstellung des ersten Schiebetors (16) erfasst.

6. Warenumschlagstation nach Anspruch 4 oder 5, **dadurch gekennzeichnet,**
- **dass** die Schutzumhausung (15) an einer zweiten und/oder an einer dritten Seite (18,19) ein weiteres Schiebetor (20,20') aufweist, welches zur Entnahme von Waren aus dem Ladungsträger (4) geöffnet sein muss, und/oder
- **dass** die Schutzumhausung (15) aus Aluminiumprofilen aufgebaut ist, und/oder
- **dass** zumindest eines der Schiebetore (16,20,20') eine Wellgitterfüllung (21) aufweist.

7. Warenumschlageinrichtung (22) mit zwei nebeneinander angeordneten Warenumschlagstationen (1,1') nach einem der Ansprüche 1 bis 6, **dadurch gekennzeichnet, dass**
- die Warenumschlageinrichtung (22) eine beide Warenumschlagstationen (1,1') umgebende Schutzumhausung (15') mit einem ersten Schiebetor (16) an der ersten Seite (2) aufweist,
- dass die Schutzumhausung (15') an einer zweiten und/oder an einer dritten (18,19) Seite ein weiteres Schiebetor (20,20') aufweist, welche(s) zur Entnahme von Waren aus dem Ladungsträger (4) geöffnet sein muss/müssen,
- dass das erste Schiebetor (16) die erste Seite (2) der ersten Warenumschlagstation (1) verschließt, während es die erste Seite (2) der zweiten Warenumschlagstation (1') öffnet, oder umgekehrt,
- dass das weitere Schiebetor (20,20') die zweite und/oder dritte Seite (18,19) der ersten Warenumschlagstation (1') verschließt, während es die zweite und/oder dritte Seite (18,19) der zweiten Warenumschlagstation (1') öffnet, oder umgekehrt.

8. Warenumschlageinrichtung nach Anspruch 7, **dadurch gekennzeichnet, dass** eine Entnahmeeinrichtung (11), insbesondere ein Roboter, zur Entnahme von Waren aus dem Ladungsträger (4) vorgesehen ist.

## Claims

1. Goods transfer station (1, 1') which is loadable and unloadable from a first side (2),
- with a tray (3) on which a load carrier (4), in particular a goods basket, is depositable, wherein the tray (3) together with load carrier (4) is pushable into and removable again from the goods transfer station (1, 1') from the first side (2),
- with a first aligning device (6) which aligns at least the load carrier (4) in the x direction in the goods transfer station (1, 1'),
- with a second aligning device (8) which aligns at least the load carrier (4) in the y direction in the goods transfer station (1, 1'),
- with a third aligning device (10) which aligns at least the load carrier (4) in the z direction in the goods transfer station (1, 1') such that the load carrier (4) takes up a spatially exactly defined position within the goods transfer station (1, 1'), **characterized in that** the third aligning device (10) has a lifting device (12) with at least one lifting bolt (13), wherein the tray (3) has at least one passage opening (14) through which the at least one lifting bolt (13) reaches in order to raise the load carrier (4) without, in the process, raising the tray (3) itself.

2. Goods transfer station according to Claim 1, **characterized in that** the first aligning device (6) has at least one stop, in particular at the end of at least one horizontal roller track (7) or at least one lateral roller track (9, 9').

3. Goods transfer station according to Claim 1 or 2, **characterized in that** the second aligning device (8) has two lateral roller tracks (9, 9') between which the load carrier (4) is guided.

4. Goods transfer station according to one of the preceding claims, **characterized in that** the goods transfer station (1, 1') has a protective housing (15) with a first sliding gate (16) on the first side (2), wherein the third aligning device (10) is operationally ready exclusively when the sliding gate (16) is closed.

5. Goods transfer station according to Claim 4, **characterized in that** a sensor (17) which detects a closed position of the first sliding gate (16) is provided on the first sliding gate (16).

6. Goods transfer station according to Claim 4 or 5, **characterized**
- **in that** the protective housing (15) has, on a second and/or on a third side (18, 19), a further sliding gate (20, 20') which has to be opened in order to remove goods from the load carrier (4), and/or
- **in that** the protective housing (15) is constructed from aluminium profiles, and/or
- **in that** at least one of the sliding gates (16, 20, 20') has a corrugated lattice filling (21).

7. Goods transfer device (22) with two goods transfer stations (1, 1') arranged next to each other according to one of Claims 1 to 6, **characterized in that**
- the goods transfer device (22) has a protective housing (15') which surrounds the two goods transfer stations (1, 1') and has a first sliding gate (16) on the first side (2),
- **in that** the protective housing (15') has, on a second and/or on a third side (18, 19), a further sliding gate (20, 20') which has to be opened in order to remove goods from the load carrier (4),
- **in that** the first sliding gate (16) closes the first side (2) of the first goods transfer station (1) while said sliding gate opens the first side (2) of the second goods transfer station (1'), or vice versa,
- **in that** the further sliding gate (20, 20') closes the second and/or third side (18, 19) of the first goods transfer station (1') while said sliding gate opens the second and/or third side (18, 19) of the second goods transfer station (1'), or vice versa.

8. Goods transfer device according to Claim 7, **characterized in that** a removal device (11), in particular a robot, is provided for removing goods from the load carrier (4).

## Revendications

1. Poste de transfert de marchandises (1, 1') qui peut être chargé et déchargé depuis un premier côté (2),
- avec une étagère (3) sur laquelle peut être déposé un support de chargement (4), en particulier un panier de marchandises, l'étagère (3) avec le support de chargement (4) pouvant être insérée dans le poste de transfert de marchandises (1, 1') depuis le premier côté (2) et en être ressortie,
- avec un premier dispositif d'alignement (6) qui aligne au moins le support de chargement (4) dans la direction x dans le poste de transfert de marchandises (1, 1'),
- avec un deuxième dispositif d'alignement (8) qui aligne au moins le support de chargement (4) dans la direction y dans le poste de transfert de marchandises (1, 1'),
- avec un troisième dispositif d'alignement (10) qui aligne au moins le support de chargement (4) dans la direction z dans le poste de transfert de marchandises (1, 1'), de telle sorte que le support de chargement (4) adopte à l'intérieur du poste de transfert de marchandises (1, 1') une position définie exactement dans l'espace, **caractérisé en ce que** le troisième dispositif d'alignement (10) présente un dispositif de levage (12) avec au moins un axe de levage (13), l'étagère (3) présentant au moins une ouverture traversante (14) à travers laquelle vient en prise l'au moins un axe de levage (13) en vue de soulever le support de chargement (4) sans soulever en même temps l'étagère (3) elle-même.

2. Poste de transfert de marchandises selon la revendication 1, **caractérisé en ce que** le premier dispositif d'alignement (6) présente au moins une butée, en particulier à l'extrémité d'au moins une piste à rouleaux horizontale (7) ou d'au moins une piste à rouleaux latérale (9, 9').

3. Poste de transfert de marchandises selon la revendication 1 ou 2, **caractérisé en ce que** le deuxième dispositif d'alignement (8) présente deux pistes à rouleaux latérales (9, 9') entre lesquelles est guidé le support de chargement (4).

4. Poste de transfert de marchandises selon l'une quelconque des revendications précédentes, **caractérisé en ce que** le poste de transfert de marchandises (1, 1') présente une enceinte de protection (15) avec une première porte coulissante (16) au niveau du premier côté (2), le troisième dispositif d'alignement (10) étant prêt à fonctionner exclusivement lorsque la porte coulissante (16) est fermée.

5. Poste de transfert de marchandises selon la revendication 4, **caractérisé en ce qu'**un capteur (17) est prévu sur la première porte coulissante (16), lequel détecte une position fermée de la première porte coulissante (16).

6. Poste de transfert de marchandises selon la revendication 4 ou 5, **caractérisé en ce que**
- l'enceinte de protection (15) présente au niveau d'un deuxième et/ou au niveau d'un troisième côté (18, 19) une porte coulissante supplémentaire (20, 20') qui doit être ouverte pour enlever les marchandises du support de chargement (4), et/ou
- **en ce que** l'enceinte de protection (15) est constituée de profilés en aluminium et/ou
- **en ce qu'**au moins l'une des portes coulissantes (16, 20, 20') présente un remplissage en grille ondulée (21).

7. Dispositif de transfert de marchandises (22) comprenant deux postes de transfert de marchandises (1, 1') disposés l'un à côté de l'autre selon l'une quelconque des revendications 1 à 6, **caractérisé en ce que**
- le dispositif de transfert de marchandises (22) présente une enceinte de protection (15') entourant les deux postes de transfert de marchandises (1, 1') avec une première porte coulissante (16) au niveau du premier côté (2),
- **en ce que** l'enceinte de protection (15') présente au niveau d'un deuxième et/ou au niveau d'un troisième côté (18, 19) une porte coulissante supplémentaire (20, 20') qui doit/doivent être ouverte(s) pour enlever les marchandises du support de chargement (4),
- **en ce que** la première porte coulissante (16) ferme le premier côté (2) du premier poste de transfert de marchandises (1) tandis qu'elle ouvre le premier côté (2) du deuxième poste de transfert de marchandises (1'), ou inversement,
- **en ce que** la deuxième porte coulissante (20, 20') ferme le deuxième et/ou le troisième côté (18, 19) du premier poste de transfert de marchandises (1'), tandis qu'elle ouvre le deuxième et/ou le troisième côté (18, 19) du deuxième poste de transfert de marchandises (1'), ou inversement.

8. Dispositif de transfert de marchandises selon la revendication 7, **caractérisé en ce qu'**un dispositif d'enlèvement (11), en particulier un robot, est prévu pour enlever les marchandises du support de chargement (4).
